(19)

Europäisches
Patentamt

European
Patent Office

Office européen
des brevets

(11) **EP 4 481 612 A2**

(12) **EUROPEAN PATENT APPLICATION**

(43) Date of publication:
**25.12.2024 Bulletin 2024/52**

(21) Application number: **24182294.9**

(22) Date of filing: **14.06.2024**

(51) International Patent Classification (IPC):
**G06F 21/64** $^{(2013.01)}$   **H04L 9/00** $^{(2022.01)}$

(52) Cooperative Patent Classification (CPC):
**G06F 21/64; H04L 9/50**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023  KR 20230078605**
**14.05.2024  KR 20240063090**

(71) Applicant: **Electronics and Telecommunications Research Institute**
**Daejeon 34129 (KR)**

(72) Inventors:
• OH, Jin-Tae
  34129 Daejeon (KR)
• KIM, Young-Chang
  34129 Daejeon (KR)
• YIM, Jong-Choul
  34129 Daejeon (KR)

(74) Representative: **Betten & Resch**
**Patent- und Rechtsanwälte PartGmbB**
**Maximiliansplatz 14**
**80333 München (DE)**

(54) **METHOD AND APPARATUS FOR DISTRIBUTED CONSENSUS USING PUBLIC NODE IDENTIFIER AND METHOD OF GENERATING BLOCKCHAIN USING THE SAME**

(57)    Disclosed herein is a method for a distributed consensus. The method includes generating public vote identifiers using public node identifiers corresponding to nodes constituting a blockchain, generating a pass vote list by performing an operation corresponding to a success probability (p) for each of the public vote identifiers, and performing a distributed consensus based on at least part of consensus congress nodes corresponding to the pass vote list.

FIG. 1

**Description**

BACKGROUND OF THE INVENTION

1. Technical Field

The present disclosure relates generally to technology for a distributed consensus in a blockchain, and more particularly to technology for selecting random nodes for a consensus congress for each block and performing a consensus for adding a new block to a chain by the consensus congress.

2. Description of the Related Art

Generally, as the number of participating nodes in a blockchain increases, the time taken to confirm a block also increases. As one of methods for overcoming this, part of all nodes are selected for a consensus congress, and the consensus congress confirms a new block, whereby the time taken to confirm the block may be reduced. Here, when fixed nodes are used for a consensus congress, which results in a centralization issue, and in order to prevent this issue, a method of selecting random nodes for a consensus congress has been employed. As existing methods of selecting random nodes for a consensus congress, distributed consensus technologies for arbitrarily selecting nodes from among all nodes using a Verifiable Random Function (VRF) or randomly selecting nodes for forming a consensus congress using a nonce chain have been introduced.

In the distributed consensus technology using the VRF, each node performs an operation corresponding to the VRF, and whether it is selected for a consensus congress is determined based on the result of the operation. The node selected for the consensus congress submits the voting result thereof along with evidence. However, this method has a disadvantage that the size of the consensus congress can be estimated based only on a probability distribution and it cannot be exactly known how many nodes are selected for the consensus congress. As a result, the exact number of nodes comprising the majority or two-thirds of the consensus congress cannot be precisely known, and thus a complex consensus process is required.

The paper titled "Algorithm based on Byzantine agreement among decentralized agents (BADA)", which was published on October 20, 2020, U.S. Patent Application Publication No. 2019-0327084, U.S. Patent Application Publication No. 2019-0379538, U.S. Patent Application Publication No. 2020-0403776, and U.S. Patent Application Publication No. 2023-0066169 disclose in detail a method for selecting a consensus congress based on a nonce chain and a method for generating a blockchain using the same. In the technologies disclosed in the aforementioned paper and patents, because the size of a consensus congress can be determined depending on the number of participating nodes, the number of nodes comprising the majority or two-thirds of the consensus congress is made known when the consensus congress is determined, and thus a simple consensus algorithm such as Practical Byzantine Fault Tolerance (PBFT) may be used. However, this method also has the disadvantage of requiring a message transfer protocol for determining a consensus congress.

The message transfer protocol for determining a consensus congress includes a process of sending and receiving messages for forming a consensus congress between nodes, which imposes a significant load on the system as the number of nodes participating in a blockchain increases. Therefore, new blockchain consensus technology that can reduce or eliminate message exchanges for forming a consensus congress is urgently required.

SUMMARY OF THE INVENTION

An object of the present disclosure is to form a blockchain consensus congress by selecting a number of random nodes corresponding to the size of the consensus congress determined depending on the number of participating nodes while minimizing exchanges of messages for forming the consensus congress.

Another object of the present disclosure is to use public node identifiers such that a consensus congress, which is randomly selected for each block without the exchange of messages for forming the consensus congress, performs a consensus using a simple consensus algorithm, such as PBFT or the like, thereby maintaining decentralization while reducing message complexity of a blockchain system and improving performance.

In order to accomplish the above objects, a method for a distributed consensus performed by a distributed consensus apparatus according to the present disclosure includes generating public vote identifiers using public node identifiers corresponding to nodes constituting a blockchain, generating a pass vote list by performing an operation corresponding to a success probability of p for each of the public vote identifiers, and performing a distributed consensus based on at least part of consensus congress nodes corresponding to the pass vote list.

Here, the pass vote list may be generated in such a way that each of the nodes constituting the blockchain performs the operation for the nodes, including itself, based on the public vote identifiers. Here, pass vote lists that the nodes constituting the blockchain generate at a specific time may be identical to each other.

Here, the operation may be to compare a random value generated using the public vote identifier and previous block information with a threshold corresponding to the success probability.

Here, a number of public vote identifiers equal to the number of votes of each of the nodes may be generated for the node using the public node identifier corresponding to the node.

Here, the consensus congress nodes may be selected from among nodes included in the pass vote list.

Here, a consensus for a previous block corresponding to the previous block information may be finally confirmed by a chair node selected from among the consensus congress nodes for a current block.

Here, the public vote identifiers may be generated by adding or subtracting one of generation values, including 0, to or from the public node identifier corresponding to each of the nodes.

Here, the public node identifiers may be public keys corresponding to the nodes.

Here, among the consensus congress nodes, a node corresponding to a largest or smallest value, among values corresponding to results of the operations, may become a chair node.

Also, an apparatus for a distributed consensus according to an embodiment of the present disclosure includes one or more processors and executable memory for storing at least one program executed by the one or more processors.

Here, the at least one program may generate public vote identifiers using public node identifiers corresponding to nodes constituting a blockchain, generate a pass vote list by performing an operation corresponding to a success probability of p for each of the public vote identifiers, and perform a distributed consensus based on at least part of consensus congress nodes corresponding to the pass vote list.

Here, the pass vote list may be generated in such a way that each of the nodes constituting the blockchain performs the operation for the nodes, including itself, based on the public vote identifiers. Here, pass vote lists that the nodes constituting the blockchain generate at a specific time may be identical to each other.

Here, the operation may be to compare a random value generated using the public vote identifier and previous block information with a threshold corresponding to the success probability.

Here, a number of public vote identifiers equal to the number of votes of each of the nodes may be generated for the node using the public node identifier corresponding to the node.

Here, the consensus congress nodes may be selected from among nodes included in the pass vote list.

Here, a consensus for a previous block corresponding to the previous block information may be finally confirmed by a chair node selected from among the consensus congress nodes for a current block.

Also, a method for generating a blockchain according to an embodiment of the present disclosure includes receiving a committed message corresponding to a previous block; generating a pass vote list using information about the previous block and public vote identifiers; receiving, by a chair node corresponding to a current block, confirm messages from consensus congress nodes corresponding to the pass vote list and finally confirming, by the chair node, a result of a consensus for the previous block based on the confirm messages, the chair node being recognized based on the pass vote list; and transmitting, by the chair node, a prepare message for connecting the current block to the blockchain to consensus committee nodes selected from among the consensus congress nodes.

Here, the method for generating a blockchain according to an embodiment of the present disclosure may further include receiving, by the chair node, commit messages from the consensus committee nodes; and transmitting, by the chair node, a committed message corresponding to the current block to all nodes.

Here, the pass vote list may be generated in such a way that each of nodes constituting the blockchain performs an operation corresponding to a success probability of p for the nodes, including itself, based on the public vote identifiers. Here, pass vote lists that the nodes constituting the blockchain generate at a specific time may be identical to each other.

Here, the operation may be to compare a random value generated using the public vote identifier and the information about the previous block with a threshold corresponding to the success probability.

Here, a number of public vote identifiers equal to the number of votes of each of the nodes may be generated for the node using a public node identifier corresponding to the node.

BRIEF DESCRIPTION OF THE DRAWINGS

The above and other objects, features, and advantages of the present disclosure will be more clearly understood from the following detailed description taken in conjunction with the accompanying drawings, in which:

FIG. 1 is a view illustrating an example of a process in which a pass vote list is generated from public vote identifiers according to an embodiment of the present disclosure;

FIG. 2 is a view illustrating an example of a distributed consensus method according to an embodiment of the present disclosure;

FIG. 3 is a view illustrating another example of the distributed consensus method according to an embodiment of the present disclosure;

FIG. 4 is a view illustrating a further example of the distributed consensus method according to an embodiment of the present disclosure;

FIG. 5 is a flowchart illustrating an example of a process in which public vote identifiers are generated from a public node identifier according to an embodiment of the present disclosure;

FIG. 6 is a view illustrating a use case of a pass vote list in a distributed consensus method according to an embodiment of the present disclosure;

FIG. 7 is a flowchart illustrating an example of a distributed consensus method according to an embodiment of the present disclosure;

FIG. 8 is a flowchart illustrating an example of a blockchain generation method according to an embodiment of the present disclosure; and

FIG. 9 is a block diagram illustrating a computer system configuration according to an embodiment of the present disclosure.

DESCRIPTION OF THE PREFERRED EMBODIMENTS

The advantages and features of the present disclosure and methods of achieving them will be apparent from the following exemplary embodiments to be described in more detail with reference to the accompanying drawings. However, it should be noted that the present disclosure is not limited to the following exemplary embodiments, and may be implemented in various forms. Accordingly, the exemplary embodiments are provided only to disclose the present disclosure and to let those skilled in the art know the category of the present disclosure, and the present disclosure is to be defined based only on the claims. The same reference numerals or the same reference designators denote the same elements throughout the specification.

It will be understood that, although the terms "first," "second," etc. may be used herein to describe various elements, these elements are not intended to be limited by these terms. These terms are only used to distinguish one element from another element. For example, a first element discussed below could be referred to as a second element without departing from the technical spirit of the present disclosure.

The terms used herein are for the purpose of describing particular embodiments only and are not intended to limit the present disclosure. As used herein, the singular forms are intended to include the plural forms as well, unless the context clearly indicates otherwise. It will be further understood that the terms "comprises," "comprising,", "includes" and/or "including," when used herein, specify the presence of stated features, integers, steps, operations, elements, and/or components, but do not preclude the presence or addition of one or more other features, integers, steps, operations, elements, components, and/or groups thereof.

Unless differently defined, all terms used herein, including technical or scientific terms, have the same meanings as terms generally understood by those skilled in the art to which the present disclosure pertains. Terms identical to those defined in generally used dictionaries should be interpreted as having meanings identical to contextual meanings of the related art, and are not to be interpreted as having ideal or excessively formal meanings unless they are definitively defined in the present specification.

Hereinafter, embodiments of the present disclosure will be described in detail with reference to the accompanying drawings. In the following description of the present disclosure, the same reference numerals are used to designate the same or similar elements throughout the drawings, and repeated descriptions of the same components will be omitted.

According to the aforementioned existing technologies, the number of nodes to be selected as candidates for a consensus congress cannot be known before a chair node receives messages about whether other nodes are selected for the consensus congress in the process for forming the consensus congress. Accordingly, the chair node according to the existing technologies sets the threshold time for forming a consensus congress, waits for responses from $3f + 1$ nodes ($f$ being a Byzantine size and an integer equal to or greater than 1), and requires an exception handling process for handling the case in which the number of nodes forming the consensus congress is less than $3f + 1$ when the threshold time expires. However, according to the present disclosure, because all of the nodes are aware of the number of nodes that succeed in a coin toss operation, the node corresponding to the chair, and nodes forming the consensus congress, the consensus may be immediately performed without the exchange of messages related to the configuration of the consensus congress.

In order to start a consensus for a block, participating nodes, which participate in a blockchain, may be assumed to be connected with a network. Here, the nodes generally use cryptography based on a public key for integrity of transferred data, and to this end, a blockchain node x may generate a public key $pk_x$ from its private key $sk_x$ and share its public key with additional nodes connected with the network. Subsequently, the node x may securely transfer data using its private key $sk_x$, and the additional nodes may decrypt the transferred data using the public key $pk_x$ of the node x and also authenticate the source of the data. Here, the public key of each of the blockchain nodes may be an example of a public node identifier according to an embodiment of the present disclosure. That is, in an embodiment of the present disclosure, a public node identifier is information open to other nodes, and may be information through which a specific node can be identified. Here, the public node identifier may be the identifier of a specific node that other nodes know or can know about. Here, the public node identifier may be shared among the corresponding node and the additional nodes, and may be transferred through information included in a message transmitted from the corresponding node to the additional nodes. For example, the public node identifier may alternatively be a serial number assigned to each of the blockchain nodes. For example, the public node identifier may be the public key itself of each of the blockchain nodes, or may be identification information generated based on the public key.

As described in detail in the aforementioned U.S. Patent Application Publication No. 2023-0066169, blockchain nodes may have a number of votes corresponding to shares possessed thereby. Likewise, in the present disclosure, blockchain nodes may have a number of votes greater than 1, and a consensus congress may be selected based on a result of performing a number of operations corresponding to the number of votes with a success probability of p. For example, when a specific node has two votes, if it succeeds in the operation corresponding to the success probability of p even for one of the two votes, the node may become a candidate for a consensus congress.

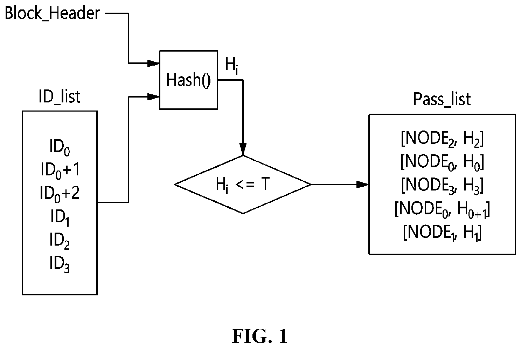

FIG. 1 is a view illustrating an example of a process in which a pass vote list is generated from public vote identifiers according to an embodiment of the present disclosure.

Referring to FIG. 1, it can be seen that a pass vote list pass_list is generated using a vote identifier list ID_list in which public vote identifiers are stored.

The public vote identifier may be an identifier corresponding to each vote (or a coin toss), and may be generated from a public node identifier. Here, a number of public vote identifiers equal to the number of votes of each of nodes participating in a blockchain may be generated for the node using the public node identifier corresponding to the node. For example, when node A has ten votes because it has ten shares, ten public vote identifiers for node A may be generated based on the public node identifier of node A. For example, when node B has two votes because it has two shares, two public vote identifiers for node B may be generated based on the public node identifier of node B.

The vote identifier list ID_list illustrated in FIG. 1 stores public vote identifiers therein when the number of nodes participating in a blockchain is 4. In the example of FIG. 1, the four nodes may have their unique public node identifiers. Here, the public node identifier of the first node may be $ID_0$, the public node identifier of the second node may be $ID_1$, the public node identifier of the third node may be $ID_2$, and the public node identifier of the fourth node may be $ID_3$. Here, the public node identifiers $ID_0$, $ID_1$, $ID_2$, and $ID_3$ may be the public keys of the respective nodes.

In the example of FIG. 1, the first node may have three votes, the second node may have one vote, the third node may have one vote, and the fourth node may have one vote. That is, the total number of votes is 6 in the example illustrated in FIG. 1.

The first node transfers the public node identifier thereof (e.g., the public key $pk_0$) and the fact that it has three votes to the additional nodes. Each of the additional nodes receiving the data may calculate three public vote identifiers $ID_0$, $ID_0+1$, and $ID_0+2$ of the first node, and the calculated three public vote identifiers of the first node may be stored in the vote identifier list ID_list. Because each of the additional nodes also transfers the public node identifier thereof and the number of votes possessed thereby to other nodes in the same manner, the nodes participating in the blockchain may individually generate the vote identifier list ID_list illustrated in FIG. 1.

In the example illustrated in FIG. 1, when the four nodes have a total of six votes, the nodes exchange information about the votes thereof with each other and respectively generate a vote identifier list ID_list including the six public vote identifiers.

Accordingly, a single public vote identifier may be generated for each of the second node, the third node, and the fourth node, and three public vote identifiers may be generated for the first node. Here, $ID_0$ that is one of the three public vote identifiers for the first node may be set to be the same as the public node identifier (e.g., the public key $pk_0$) of the first node. Here, $ID_0+1$ that is another one of the three public vote identifiers for the first node may be set to a value acquired by adding 1 to the public node identifier thereof. Here, $ID_0+2$ that is a further one of the three public vote identifiers for the first node may be set to a value acquired by adding 2 to the public node identifier of the first node. Particularly, when a public key is used as the public node identifier, even though public vote identifiers generated by sequentially incrementing by 1 from the public node identifier are used as described above, the possibility that the public vote identifiers are repeated is close to zero. That is, each of the public vote identifiers $ID_0+1$ and $ID_0+2$ is a value acquired by adding an arbitrary value to the public key of the node, and because it is almost impossible to find a private key corresponding thereto, it may be regarded as arbitrary data. As described above, the public keys of the nodes and the pieces of arbitrary data, the total number of which equals to the total number of votes, may be stored in the vote identifier list ID_list.

Here, $ID_1$ that is the public vote identifier for the second node may be set to be the same as the public node identifier (e.g., the public key $pk_1$) of the second node. Here, $ID_2$ that is the public vote identifier for the third node may be set to be the same as the public node identifier (e.g., the public key $pk_2$) of the third node. Here, $ID_3$ that is the public vote identifier for the fourth node may be set to be the same as the public node identifier (e.g., the public key $pk_3$) of the fourth node.

Consequently, a total of six public vote identifiers $ID_0$, $ID_0+1$, $ID_0+2$, $ID_1$, $ID_2$, and $ID_3$ for the four nodes may be stored in the vote identifier list, as illustrated in FIG. 1, and because the vote identifier list is generated based on the public node identifiers open to all of the nodes, it may be individually generated by each of the nodes participating in the blockchain. The generated public vote identifiers may match with the votes in a one-to-one manner.

When multiple public vote identifiers are generated from a single public node identifier, a method of sequentially incrementing by a preset number (e.g., 1) from the public node identifier (the first public vote identifier being set to the public node identifier) is used in the example of FIG. 1, but any of various methods may also be used as the method of generating multiple public vote identifiers from a single public node identifier. Particularly, when multiple public vote identifiers are generated from a single public node identifier, it is desirable to use a method capable of minimizing the possibility that repeated public vote identifiers are generated.

That is, according to an embodiment of the present disclosure, each of nodes participating in a blockchain may disclose the public node identifier (e.g., the public key) thereof and the number of votes possessed thereby to the other nodes. Accordingly, all of the nodes participating in the blockchain may respectively generate the vote identifier list ID_list illustrated in FIG. 1 because each of the nodes is aware of the public node identifiers and the numbers of votes of all of the nodes, including itself, participating in the blockchain. Here, the public vote identifiers included in the vote identifier list ID_list may correspond to the votes, respectively.

In the example illustrated in FIG. 1, when the block to be added to the blockchain is input, the data stored in the vote identifier list ID_list is extracted, and a pass vote list pass_list may be generated. That is, the pass vote list pass_list according to an embodiment of the present disclosure may be generated after a block that is agreed upon is completed, and may be maintained for only the corresponding block.

In a blockchain consensus process, the agreed-upon block is stored in a committed message after it is completed, and may then be propagated to all nodes. That is, in the blockchain consensus process, a chair may propagate the block completed in a commit phase to all the nodes in a committed phase. Accordingly, when the agreed-upon block is completed, the respective nodes of the blockchain may have already generated the vote identifier list ID_list, and upon receiving the committed message, by which the agreed-upon block that is completed is propagated to all of the nodes, the nodes may generate a pass vote list Pass_list by performing an operation corresponding to a success probability of p using the header value Block_Header of the completed block.

That is, the nodes receiving the block extract the header value Block_Header of the block and perform the operation corresponding to the success probability (p) using the extracted header value along with the public vote identifiers within the vote identifier list ID_list generated as shown in FIG. 1, thereby generating a pass vote list Pass_list.

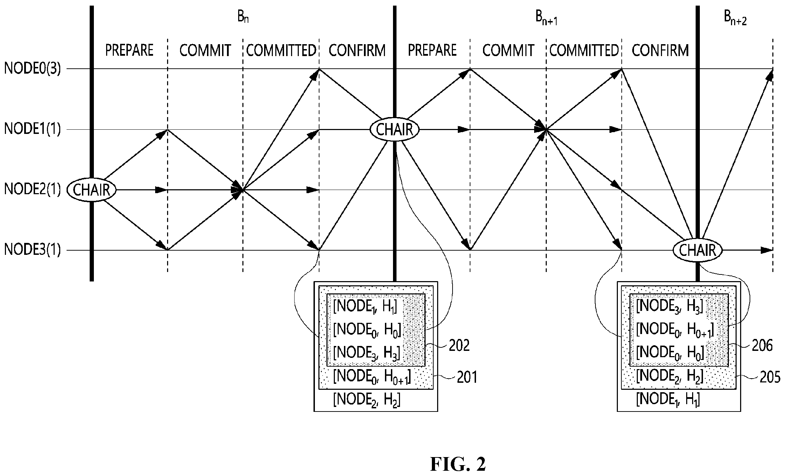

In the example illustrated in FIG. 1, 'Hash()' is a hash function that receives the header value Block_Header of a block and a public vote identifier as input, and $H_i$ (i being a vote identifier) is a random value generated through the hash function. Here, the public vote identifiers are brought from the vote identifier list ID_list one by one, and the hash operation is performed on the public vote identifier and the header value Block_Header of the block, whereby $H_i$ may be calculated. Here, $H_i$ may be represented as Hash (Header_$B_n$, $ID_i$). Here, Header_$B_n$ may indicate Block_Header corresponding to the block $B_n$ illustrated in FIG. 2, and $ID_i$ may be the public vote identifier corresponding to the index i.

Here, the hash function may be SHA256 or the like. Here, the random value $H_i$ generated to correspond to the public vote identifier $ID_i$ may be a value acquired by extracting some bits from the output of the hash function. For example, the random value $H_i$ may be a value corresponding to part (e.g., lower 32 bits [31:0]) of 256 bits [255:0] output from the SHA256 function.

That is, the random values $H_i$ corresponding to the respective votes are generated, and only values that are not greater than a preset threshold T, among the generated random values, may be stored in the pass vote list Pass_list in the form of a pair of [node number, $H_i$] .

Here, an arbitrary value may be used as the threshold T, and as described in the aforementioned U.S. Patent Application Publication No. 2023-0066169 and the like, the success probability p of the votes (coin tosses) of nodes and 3f +1, which is the size of a consensus congress, may be calculated by applying Equations (1) and (2) below. Here, the threshold T satisfying the success probability p of the coin toss may be calculated in consideration of the maximum value of the random value $H_i$.

$$1 - \sum_{k=0}^{f} \binom{b}{k} p^k (1-p)^{(b-k)} \leq P_{\max\_bzt} \qquad (1)$$

$$\sum_{x=0}^{3f} \binom{n}{x} p^x (1-p)^{(n-x)} \leq P_{\min\_node} \qquad (2)$$

Coin tosses are performed for all random values $H_i$ by implementing the coin toss with the success probability of p through a process (operation) of comparing the threshold T with the magnitude of the random value $H_i$, and when the coin toss succeeds, the pair of [node number, $H_i$] is added to the pass vote list Pass_list.

In the example illustrated in FIG. 1, it can be seen that only the random values corresponding to five votes, among six votes, are included in the pass vote list Pass_list. That is, it can be seen that the operations performed for only the random values $H_0$ and $H_{0+1}$ corresponding to the two vote identifiers $ID_0$ and $ID_0+1$, among the three public vote identifiers $ID_0$, $ID_0+1$, and $ID_0+2$ for the first node, succeed (the random values do not exceed T as a result of comparison with the threshold) and that the operation performed for the random value $H_{0+2}$ corresponding to the public vote identifier $ID_0+2$ fails (the random value exceeds T as a result of comparison with the threshold). Also, it can be seen that the operations performed for all of the random values $H_1$, $H_2$, and $H_3$ corresponding to the public vote identifiers $ID_1$, $ID_2$, and $ID_3$ for the remaining nodes succeed (the random values do not exceed T as a result of comparison with the threshold), whereby a total of five random values $H_0$, $H_{0+1}$, $H_1$, $H_2$, and $H_3$ are stored in the pass vote list Pass_list along with the node numbers corresponding thereto.

That is, only when the operation succeeds (the random value does not exceed T as a result of comparison with the threshold) can the result be stored in the pass vote list Pass_list in the example of FIG. 1. Accordingly, the two results including $[NODE_0, H_0]$, which is the result of the operation performed using the public vote identifier $ID_0$, and $[NODE_0, H_{0+1}]$, which is the result of the operation performed using the public vote identifier $ID_0+1$, are stored for the first node, $[NODE_1, H_1]$, which is the result of the operation performed using the public vote identifier $ID_1$, is stored for the second node, $[NODE_2, H_2]$, which is the result of the operation performed using the public vote identifier $ID_2$, is stored for the third node, and $[NODE_3, H_3]$, which is the result of the operation performed using the public vote identifier $ID_3$, is stored for the fourth node.

Here, the result values stored in the pass vote list Pass_list may be arranged in order of the magnitude of the random values. For example, the results values stored in the pass vote list Pass_list may be arranged in ascending order of the magnitude of the random values. In the example illustrated in FIG. 1, it can be seen that the magnitude of the random values is $H_2 < H_0 < H_3 < H_{0+1} < H_1$. Here, after the operations for all of the public vote identifiers are finished, 3f + 1 nodes may be selected from the pass vote list Pass_list according to the ascending order and set as the nodes for forming a consensus congress.

FIG. 2 is a view illustrating an example of a distributed consensus method according to an embodiment of the present disclosure.

Referring to FIG. 2, it can be seen that a total of four nodes, including NODEO, NODE1, NODE2, and NODE3, participate in a blockchain and that the total number of votes is 6 (three votes for NODEO, one vote for NODE1, one vote for NODE2, and one vote for NODE3).

The node NODE2 is a chair node for a consensus for a block $B_n$. The node NODE2 transmits a prepare message for the consensus for the block $B_n$ to consensus committee nodes NODE1, NODE2, and NODE3, completes the agreed-upon block $B_n$ by receiving commit messages from the consensus committee nodes NODE1, NODE2, and NODE3, and transmits a committed message for propagating the completed agreed-upon block $B_n$ to all of the nodes NODEO, NODE1, NODE2, and NODE3.

All of the nodes NODEO, NODE1, NODE2, and NODE3 receiving the committed message for the completed agreed-upon block $B_n$ may form a consensus congress for a block $B_{n+1}$ using block information Header_$B_n$ for the completed agreed-upon block $B_n$.

That is, the chair node NODE2 corresponding to the agreed-upon block $B_n$ propagates the block $B_n$, which is completed in the commit phase, to all of the nodes NODEO, NODE1, NODE2, and NODE3 in the committed phase, as illustrated in FIG. 2.

The nodes receiving the block $B_n$ extract the header value of the block $B_n$, generate random values by performing a hash operation on the extracted header value and respective public vote identifiers included in a vote identifier list, and generate a pass vote list by comparing the random values with a preset threshold.

The pass vote list for the block $B_{n+1}$ may be calculated by all of the nodes receiving the committed message corresponding to the block $B_n$, and information about the members of the consensus congress of the pass vote list needs to be maintained in order for all of the nodes receiving the committed message corresponding to the block $B_{n+1}$ to confirm that the block is signed by valid signers. Here, the chair may need the information about the members of the consensus congress of the pass vote list in all of the phases (including confirm, prepare, commit, and committed phases) of the consensus in order to form the consensus congress and the consensus committee. The remaining nodes, excluding the chair, need the information about the members of the consensus congress of the pass vote list in order to check the chair node and to perform a consensus when they are the members of the consensus congress, and nodes that are not included in the consensus congress may need the information about the members of the consensus congress of the pass vote list in order to check whether the committed block is signed by the nodes belonging to the consensus committee.

Here, the pass vote list for the block $B_{n+1}$ may be generated only after the committed message corresponding to the block $B_n$ is received. Accordingly, a time period during which the valid pass vote list is maintained is managed to not be too long, and a random value to be used for a coin toss (an operation with a success probability of p) may be appropriately generated.

In the example illustrated in FIG. 2, the pass vote list for the block $B_{n+1}$ may store $[NODE_1, H_1]$, $[NODE_0, H_0]$, $[NODE_3, H_3]$, $[NODE_0, H_{0+1}]$, and $[NODE_2, H_2]$ in ascending order of the magnitude of the random values $H_i$. That is, in the example illustrated in FIG. 2, it can be seen that the magnitude of the random values is $H_1 < H_0 < H_3 < H_{0+1} < H_2$. Also, in the example illustrated in FIG. 2, it can be seen that a coin toss for only the public vote identifier corresponding to the third vote of the node NODEO, among the six votes, fails, and that coin tosses for all of the remaining public vote identifiers succeed.

Here, $[NODE_1, H_1]$ may be the operation result corresponding to the random value $H_1$ calculated based on a single public vote identifier of the node NODE1, $[NODE_0, H_0]$ may be the operation result corresponding to the random value $H_0$ calculated based on the first public vote identifier (e.g., the public key of the node NODEO), among the three public vote identifiers of the node NODEO, $[NODE_3, H_3]$ may be the operation result corresponding to the random value $H_3$ calculated based on a single public vote identifier of the node NODE3, $[NODE_0, H_{0+1}]$ may be the operation result corresponding to the random value $H_{0+1}$ calculated based on the second public vote identifier (e.g., the public key of the NODEO + 1), among the three public vote identifiers of the node NODEO, and $[NODE_2, H_2]$ may be the operation result corresponding to the random value $H_2$ calculated based on a single public vote identifier of the node NODE2. In the example of FIG. 2, it can be seen that the random value $H_{0+2}$ calculated based on the third public vote identifier (e.g., the public key of the node NODEO + 2), among the three public vote identifiers of the node NODEO, does not pass the comparison with the threshold (coin toss).

Here, the consensus congress 201 for the block $B_{n+1}$ is configured with $[NODE_1, H_1]$, $[NODE_0, H_0]$, $[NODE_3, H_3]$, and $[NODE_0, H_{0+1}]$. Here, because $[NODE_1, H_1]$ corresponds to the smallest random value, the node NODE1 may become a chair node for a consensus for the subsequent block $B_{n+1}$, as illustrated in FIG. 2.

In the example of FIG. 2, the consensus for the block $B_{n+1}$ is started, and the node NODE1, which is a chair, selects $[NODE_1, H_1]$, $[NODE_0, H_0]$, and $[NODE_3, H_3]$ for a consensus committee 202 and transmits a prepare message to the nodes NODE1, NODEO, and NODE3 corresponding thereto.

As described above, the existing technology does not allow each of votes by the shares of nodes to be exercised individually for each consensus congress, but according to the present disclosure, when a consensus congress is selected, the votes of the nodes may be individually exercised for selecting the consensus congress.

The consensus for the block $B_{n+1}$ may be performed through a process in which the chair node NODE1 receives commit messages from the nodes NODEO, NODE1, and NODE3 corresponding to the consensus committee and transmits a committed message corresponding thereto to all of the nodes, as illustrated in FIG. 2.

Upon receiving the committed message corresponding to the block $B_{n+1}$, all of the nodes may generate a pass vote list corresponding to a block $B_{n+2}$. That is, each of the nodes receiving the committed message corresponding to the block $B_{n+1}$ extracts the header value of the block $B_{n+1}$, generates random values by performing a hash operation on the extracted header value and the respective public vote identifiers included in the vote identifier list, and generates a pass vote list for the block $B_{n+2}$ by comparing the random values with a preset threshold.

In the example illustrated in FIG. 2, the pass vote list for the block $B_{n+2}$ may store $[NODE_3, H_3]$, $[NODE_0, H_{0+1}]$, $[NODE_0, H_0]$, $[NODE_2, H_2]$, and $[NODE_1, H_1]$ in ascending order of the magnitude of the random values $H_i$. That is, in the example illustrated in FIG. 2, it can be seen that the magnitude of the random values generated for a consensus for the block $B_{n+2}$ is $H_3 < H_{0+1} < H_0 < H_2 < H_1$. Also, in the example illustrated in FIG. 2, it can be seen that only the coin toss for the public vote identifier corresponding to the third vote of the node NODEO, among the six votes, fails, and coin tosses for all of the remaining public vote identifiers succeed.

Here, $[NODE_3, H_3]$ may be the operation result corresponding to the random value $H_3$ calculated based on a single public vote identifier of the node NODE3, $[NODE_0, H_{0+1}]$ may be the operation result corresponding to the random value $H_{0+1}$ calculated based on the second public vote identifier (e.g., the public key of the node NODEO + 1), among the three public vote identifiers of the node NODEO, $[NODE_0, H_0]$ may be the operation result corresponding to the random value $H_0$ calculated based on the first public vote identifier (e.g., the public key of the node NODEO), among the three public vote identifiers of the node NODEO, $[NODE_2, H_2]$ may be the operation result corresponding to the random value $H_2$ calculated based on a single public vote identifier of the node NODE2, and $[NODE_1, H_1]$ may be the operation result corresponding to the random value $H_1$ calculated based on a single public vote identifier of the node NODE1. In the example of FIG. 2, it can be seen that the random value $H_{0+2}$ calculated based on the third public vote identifier (e.g., the public key of the node NODEO + 2), among the three public vote identifiers of the node NODEO, does not pass the comparison with the threshold (coin toss) again when the consensus congress for the block $B_{n+2}$ is formed.

Here, the consensus congress 205 for the block $B_{n+2}$ is configured with $[NODE_3, H_3]$, $[NODE_0, H_{0+1}]$, $[NODE_0, H_0]$, and $[NODE_2, H_2]$. Here, because $[NODE_3, H_3]$ corresponds to the smallest random value, the node NODE3 may become a chair node for the consensus for the subsequent block $B_{n+2}$, as illustrated in FIG. 2.

In the example of FIG. 2, the consensus for the block $B_{n+2}$ is started, and the node NODE2, which is a chair,

selects [NODE$_3$, H$_3$], [NODE$_0$, H$_{0+1}$], and [NODE$_0$, H$_0$] for a consensus committee 206 and transmits a prepare message to the nodes NODE3 and NODEO corresponding thereto.

In the existing distributed consensus technologies, such as a distributed consensus method using a nonce chain, and the like, each of nodes succeeding in a coin toss has to generate a message for verifying that the node itself succeeds in the coin toss and transmit the same to additional nodes. Based on the message received from the specific node, the additional nodes confirm that the corresponding node succeeded in the coin toss and form a consensus congress.

However, according to the present disclosure, all nodes are able to generate an identical pass vote list for a specific block using public node identifiers assigned to the respective nodes, such as public keys or the like, and thus, the nodes can easily check the nodes forming a consensus congress without special messages for forming the consensus congress, whereby the consensus efficiency may be maximized.

That is, according to the present disclosure, distributed nodes connected to a blockchain may calculate the configuration of a consensus congress for a subsequent block by themselves without receiving messages related to the new consensus congress from other nodes. The nodes participating in the consensus individually calculate values for selecting the consensus congress for the subsequent block for each of the nodes using the public vote identifiers of all of the participating nodes and data extracted from a current block, thereby calculating the consensus congress for the subsequent block.

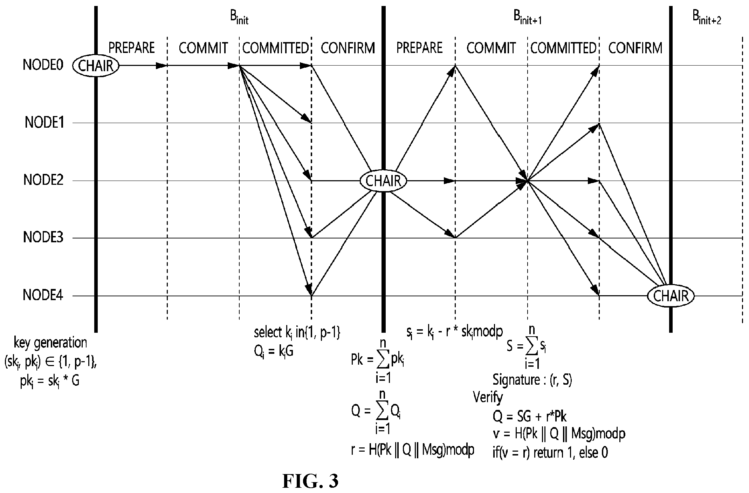

FIG. 3 is a view illustrating another example of the distributed consensus method according to an embodiment of the present disclosure.

Referring to FIG. 3, it can be seen that a total of five nodes NODEO, NODE1, NODE2, NODE3, and NODE4 participate in a blockchain and that the total number of votes is 5 (each node having one vote). That is, FIG. 3 illustrates a process in which a random consensus congress is formed without the exchange of additional messages for forming the consensus congress when all participating nodes each have a share of 1, and the consensus congress performs a consensus.

The example of FIG. 3 may correspond to the process of generating an initial block after the participating nodes participating in the blockchain share the public node identifiers thereof and the numbers of votes possessed thereby. Here, before the process illustrated in FIG. 3 is performed, the setup of a vote identifier list including public vote identifiers may have been completed.

In the example illustrated in FIG. 3, a protocol for generation of an initial block and a consensus process is described on the assumption that all of the nodes each have one vote for convenience of description, but each of the nodes may have multiple votes, as described above. When some of the nodes participate in a consensus congress with multiple votes, efficient consensus is possible by transferring only one message for the consensus and using a count included in a committee as a consensus count.

In the process for a consensus for the initial block B$_{init}$, the node NODEO that is randomly selected as a chair for the consensus for the initial block solely generates the initial block by signing the block while passing through prepare and commit phases, and transfers the initial block to all of the nodes NODEO, NODE1, NODE2, NODE3, and NODE4.

As illustrated in FIG. 3, the consensus process includes four phases. Because only the node NODEO participates in the consensus congress in the process for the consensus for the initial block B$_{init}$, the prepare and commit phases may be performed in the node NODEO. In this process, signing the initial block B$_{init}$ is performed using the private key of the node NODEO, and the signed final block is transferred to all of the nodes NODEO, NODE1, NODE2, NODE3, and NODE4 in the committed phase. In the example of FIG. 3, EC-Schnorr multi-signature may be used for the consensus. The multi-signature and the like in the consensus process are disclosed in detail in the aforementioned U.S. Patent Application Publication No. 2020-0403776, and the like.

In the confirm phase, each of the nodes verifies the signature of the initial block B$_{init}$, and when there is a problem, this indicates failure of the consensus, and a protocol for again performing a consensus is performed. When there is no problem in the verification result, a pass vote list Pass_list is generated using vote identifiers contained in the stored vote identifier list ID_list of the nodes and the header value of the initial block B$_{init}$, as described with reference to FIG. 1. As described above, all of the nodes receiving the committed message may generate a pass vote list.

In the example of FIG. 3, it is assumed that the five nodes NODEO, NODE1, NODE2, NODE3, and NODE4 each participate with a single vote, so p and f satisfying Equations (1) and (2) above are 1.0 and 1, respectively. All of [node number, H$_i$] pairs satisfying the condition of comparison with a threshold are added to the pass vote list Pass_list, and four nodes are selected therefrom in ascending order of H; for a consensus congress. In the example of FIG. 3, all of the five votes pass the comparison with the threshold, and the five [node number, H$_i$] pairs arranged in ascending order may be stored in the pass vote list Pass_list. Here, among the stored values, the result values for 3f + 1 nodes, that is, the four nodes NODE2, NODEO, NODE4, and NODE3, may be selected as nodes corresponding to the consensus congress. Accordingly, the consensus congress nodes for a consensus for a subsequent block B$_{init+1}$ may be the nodes NODE2, NODEO, NODE4, and NODE3, and the node NODE2 corresponding to the smallest H$_i$ becomes a chair node for the block B$_{init+1}$.

FIG. 3 illustrates an example in which the nodes NODE2, NODEO, NODE4, and NODE3 are selected for the consensus congress and perform a consensus. This process may be performed by all of the distributed nodes, and because the results of the operation (coin toss) by all of the nodes confirming the same initial block $B_{init}$ are the same as each other, all of the nodes may form the same consensus congress without the exchange of messages for forming the consensus congress between the nodes.

Referring again to FIG. 3, the nodes NODE2, NODEO, NODE4, and NODE3 selected for a consensus congress in the confirm phase respectively generate random $k_i$ and generate $Q_i$ on the elliptic curve. Each of the nodes included in the consensus congress transfers the checksum of the block header received thereby and $Q_i$ to the node NODE2, which is the chair node for the subsequent block $B_{init+1}$, thereby enabling the result of the consensus for the initial block $B_{init}$ to be confirmed and preparing for the consensus for the subsequent block. Here, the checksum and $Q_i$ are transferred along with the signature of node i, whereby the integrity is ensured. Here, the nodes selected for the consensus congress transfer the transactions yet to be processed to the chair node such that the chair node is able to process the same.

The node NODE2, which is a chair for the block $B_{init+1}$, randomly selects 2f + 1 nodes from among the nodes submitting the checksum and $Q_i$. The node NODE2 checks whether the checksums of the selected nodes are the same as each other to thereby confirm that the nodes receive the same block $B_{init}$, and performs a consensus together with the 2f + 1 nodes. In the example illustrated in FIG. 3, the node NODE2, which is the chair for the block $B_{init+1}$, selects three (2f + 1) consensus committee nodes NODE2, NODEO, and NODE3 from among the four (3f + 1) consensus congress nodes NODE2, NODEO, NODE4, and NODE3, confirms that the checksums of the nodes NODE2, NODEO, and NODE3 are the same as each other, and performs the consensus together with the nodes NODE2, NODEO, and NODE3.

As it can be seen through FIG. 3, the chair that initiates the initial block $B_{init}$ is the node NODEO, but the node NODE2 that is the chair for the subsequent block $B_{init+1}$ may finally confirm the result of the consensus for the initial block $B_{init}$.

In the prepare phase for the block $B_{init+1}$, the node NODE2 generates a preparatory block including transactions received from a guest or the transactions received from the nodes in the confirm phase for the block $B_{init}$. Here, a prepare message (including a prepare block) may be generated by including the values of Pk, Q, and r acquired by combining the public keys and $Q_i$ of the respective nodes NODE2, NODEO, and NODE3 in the block, and may then be transferred to the nodes NODE2, NODEO, and NODE3 for the consensus. The nodes NODE2, NODEO, and NODE3 receiving the prepare message check whether or not the block is normal, and when the block is normal, each of the nodes generates $s_i$ signed with the private key thereof and returns a commit message to the chair node NODE2. The chair node NODE2 receiving all of the commit messages generates S by combining values corresponding to $s_i$, generates a committed block by completing a signature (r, S), and transfers the committed block to all of the nodes.

Each of the nodes receiving the committed block checks the validity of the block by checking the public keys and signatures corresponding to the 2f + 1 nodes of the consensus congress. When the checking result is valid, $H_i$ is calculated using the header value of the block $B_{init+1}$ and a next pass vote list may be generated, whereby a consensus congress for a block $B_{init+2}$ may be formed. In the example of FIG. 3, the nodes NODE4, NODE3, NODE1 and NODE2 form the consensus congress and transmit a confirm message to the node NODE4 that is the chair for the block $B_{init+2}$. That is, in the confirm phase of the block $B_{init+1}$, each of the nodes NODE4, NODE3, NODE1, and NODE2 transfers the checksum and Q; to the node NODE4, thereby completing the consensus for the block $B_{init+1}$. Then, a consensus for the block $B_{init+2}$ may be performed in the same manner as the above-described process for the block $B_{init+1}$.

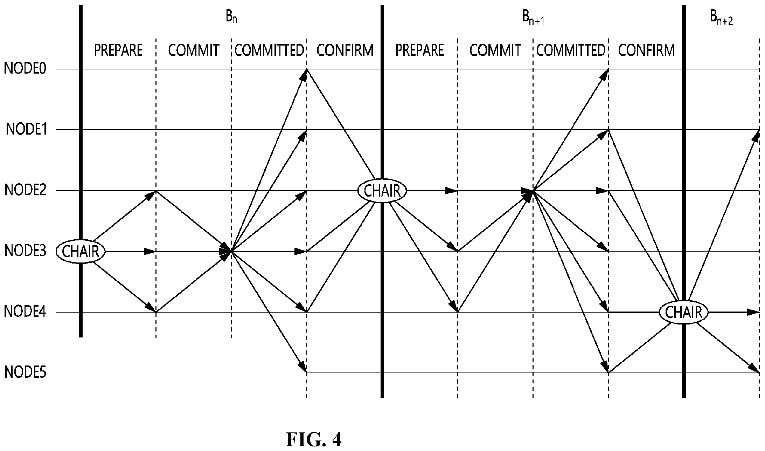

FIG. 4 is a view illustrating a further example of the distributed consensus method according to an embodiment of the present disclosure.

Referring to FIG. 4, it can be seen that the node NODES is added as a participating node in addition to the existing five nodes NODEO, NODE1, NODE2, NODE3, and NODE4.

That is, it can be seen that, when the node NODES is added as a participating node during the consensus period for a block $B_n$, as shown in FIG.4, the node NODES is able to participate normally in the consensus congress from a consensus for a block $B_{n+1}$ (a node addition process).

In the example of FIG. 4, it is assumed that the intention of the node NODE5 to participate in the consensus is transferred to the node NODE3, which is a chair for the block $B_n$. The node NODE5 first accesses the network over which the consensus is underway and thereby collects information about the nodes currently participating in the consensus. After receiving the information about the consensus congress nodes and public node identifiers (e.g., public keys), the node NODE5 generates a vote identifier list ID_list including public vote identifiers based thereon and transfers its intention to participate in the consensus to other nodes. Each of the nodes receiving the information about the new participating node during the time period corresponding to a block $B_{n-1}$ may transfer the corresponding content to the node NODE3, which is a chair, during the time period corresponding to the block $B_n$. The node NODE3 includes the corresponding content in the transactions to be agreed upon, thereby performing the consensus. Here, the block for which the commit phase is completed may include the information about the new participating node. Accordingly, when the commit phase is completed, the node NODE3, which is the chair, may add the public vote identifier(s) of the node NODE5 in the vote identifier list ID_list thereof. In the committed phase, the node NODE3, which is the chair, may transfer the generated block to all of the nodes. All of the nodes receiving the committed message respectively add the public vote identifier(s) of the node NODE5, which is the new node, in their vote identifier lists ID_list. Accordingly, from the confirm phase of the block $B_n$, the nodes NODEO, NODE1, NODE2, NODE3, NODE4, and NODE5 are able to participate in the consensus.

In the consensus process for the block $B_{n+1}$, the node NODE2, which is a chair node, agrees upon the new block through the prepare and commit phases and propagates the completed block to all of the nodes. That is, the new node may participate in the consensus through the process illustrated in FIG. 4.

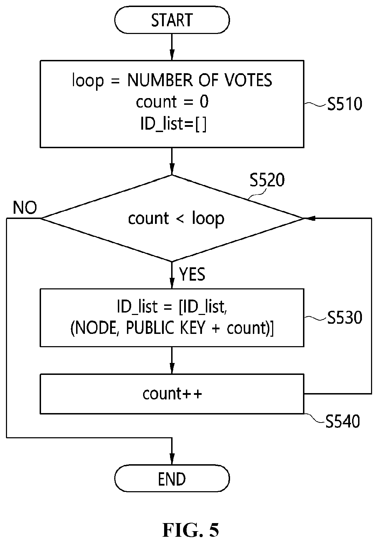

FIG. 5 is a flowchart illustrating an example of a process in which one or more public vote identifiers are generated from a public node identifier according to an embodiment of the present disclosure.

Referring to FIG. 5, it can be seen that a public key is used as an example of a public node identifier of a node, and one or more public vote identifiers are generated based on the public key of the node and included in a vote identifier list ID_list.

The steps illustrated in FIG. 5 show a process of generating one or more public vote identifiers using the public node identifier of a specific node for the corresponding node. The steps illustrated in FIG. 5 may be performed for each public node identifier. For a specific public node identifier (e.g., a public key), a number of public vote identifiers equal to the number of votes of the corresponding node may be generated through the process illustrated in FIG. 5.

First, variables for generating public vote identifiers are initialized at step S510. That is, at step S510, the variable 'loop' is set to a value corresponding to the number of votes of a corresponding node, the variable 'count' is set to 0, and a vote identifier list ID_list is initialized.

Subsequently, the variable 'count' is compared with the variable 'loop' at step S520. When 'count' is less than 'loop' as the result of the comparison at step S520, a public vote identifier corresponding to the sum of the public key (the public node identifier) of the corresponding node and the variable 'count' is added in the vote identifier list ID_list at step S530. As illustrated in FIG. 5, a node number may also be stored in the vote identifier list ID_list along with the public vote identifier.

When the public vote identifier is added at step S530, the variable 'count' is increased by 1 at step S540, and the process goes back to step S520, whereby the variable 'count' is compared with the variable 'loop'.

When 'count' is not less than 'loop' as the result of the comparison at step S520, the process of generating vote identifiers for the corresponding node is terminated.

Through the process illustrated in FIG. 5, a number of public vote identifiers (the public key, the public key + 1, the public key + 2, ..., the public key + the number of votes - 1) equal to the number of votes corresponding to a specific node may be generated.

Although the case in which the public vote identifiers are generated by adding a preset number to the public node identifier is illustrated in the example of FIG. 5, various methods may be used as a method of generating a number of public vote identifiers equal to the number of votes from the public node identifier.

Here, the public vote identifiers may be generated by a vote identifier generator (function). In the example illustrated in FIG. 5, the vote identifier generator may be a function that adds count, which increases by 1, to the input public node identifier (public key).

The vote identifier generator (function) may be any of various forms of functions that receive a public node identifier as input and output a number of public vote identifiers equal to the number of votes. Here, the vote identifier generator may include a duplicate checker for checking whether the generated public vote identifiers are repeated. Here, the duplicate checker may check not only whether the generated public vote identifier is a duplicate of other vote identifiers but also whether the generated public vote identifier is a duplicate of a public node identifier corresponding to another node.

As described above, when a number of public vote identifiers equal to the number of votes of a single node is generated and when a coin toss is performed using the public vote identifiers, the coin tosses can be performed in parallel, whereby the speed of the operation for selecting a consensus congress may increase, compared to a method in which the result of a single coin toss performed in a specific node is hashed and a subsequent coin toss is performed based thereon.

The public vote identifiers generated by the vote identifier generator may be unique identifiers respectively corresponding to the votes possessed by the node, and the number of bits representing the public vote identifier and the number of bits representing the public node identifier may be equal to each other or may be different from each other.

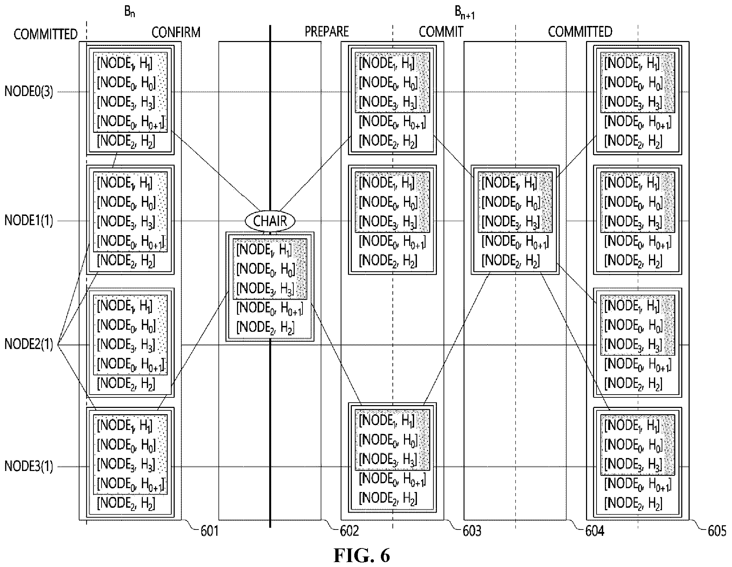

FIG. 6 is a view illustrating a use case of a pass vote list in a distributed consensus method according to an embodiment of the present disclosure.

Referring to FIG. 6, it can be seen that the pass vote lists 601 generated by the nodes NODEO, NODE1, NODE2, and NODE3 that receive the committed block of a block $B_n$ are identical to each other. Here, the nodes NODEO, NODE1, NODE2, and NODE3 may confirm that a chair is the node NODE1 and check whether they are included in a consensus congress.

The node NODEO confirms that $[NODE_1, H_1]$, $[NODE_0, H_0]$, $[NODE_3, H_3]$, and $[NODE_0, H_{0+1}]$ are selected

from the pass vote list for a consensus congress and confirms that the result value $[NODE_0, H_0]$ corresponding to itself is located at the second position in the pass vote list, thereby confirming that it is selected for the consensus congress. Here, the node NODEO may know that the node NODE1 becomes a chair based on the first result value $[NODE_1, H_1]$ of the pass vote list. Further, the node NODEO confirms that the result value $[NODE_0, H_{0+1}]$ corresponding to itself is located at the fourth position in the pass vote list, thereby confirming that it has two votes in the consensus congress.

The node NODE1 confirms that $[NODE_1, H_1]$, $[NODE_0, H_0]$, $[NODE_3, H_3]$, and $[NODE_0, H_{0+1}]$ are selected from the pass vote list for a consensus congress, and may know that it is selected for the consensus congress based on the first result value $[NODE_1, H_1]$ and it becomes a chair.

The node NODE2 confirms that $[NODE_1, H_1]$, $[NODE_0, H_0]$, $[NODE_3, H_3]$, and $[NODE_0, H_{0+1}]$ are selected from the pass vote list for a consensus congress, and may confirm that the result value $[NODE_2, H_2]$ corresponding to itself is not included in the consensus congress. Here, the node NODE2 may know that the node NODE1 becomes a chair based on the first result value $[NODE_1, H_1]$ of the pass vote list.

The node NODE3 confirms that $[NODE_1, H_1]$, $[NODE_0, H_0]$, $[NODE_3, H_3]$, and $[NODE_0, H_{0+1}]$ are selected from the pass vote list for a consensus congress and confirms that the result value $[NODE_3, H_3]$ corresponding to itself is located at the third position in the pass vote list, thereby confirming that it is selected for the consensus congress. Here, the node NODE3 may know that the node NODE1 becomes a chair based on the first result value $[NODE_1, H_1]$ of the pass vote list.

The node NODE1 receives confirm messages from the consensus congress nodes NODEO, NODE1, and NODE3 because it is a chair.

The nodes NODEO and NODE3 send the confirm message to the node NODE1 after they confirm that they are included in the consensus congress although they are not a chair node.

The chair forms a consensus committee by selecting nodes from the consensus congress, and it can be seen that the nodes NODE1, NODEO, and NODE3 are selected for the consensus committee in the example illustrated in FIG. 6. Here, the result value $[NODE_0, H_{0+1}]$ corresponding to the second public vote identifier $ID_0+1$ of the node NODEO is included in the consensus congress, but is not included in the consensus committee.

When the chair forms the consensus committee by selecting the nodes NODE1, NODEO, and NODE3, as illustrated in FIG. 6, it generates $r_{103}$ using $Pk_{103}$ acquired by combining the public keys of the nodes NODE1, NODEO, and NODE3 when it combines the public keys, and provides the same to the consensus committee nodes.

If the chair forms the consensus committee by selecting $[NODE_1, H_1]$, $[NODE_0, H_0]$, and $[NODE_0, H_{0+1}]$ from among the result values corresponding to the consensus congress, unlike that illustrated in FIG. 6, it generates $r_{10}$ using $Pk_{10}$ acquired by combining the public keys of the nodes NODE1 and NODEO when it combines the public keys, and provides the same to the consensus committee nodes.

Accordingly, because the generated Pk and r vary depending on the configuration of the consensus committee, the members of the consensus committee generate s; using the received r in the state in which they do not know the signers, and the chair is not able to simultaneously generate two multi-signatures.

However, it is necessary to notify the consensus committee nodes of the nodes belonging to the consensus committee such that they check whether the chair completes the consensus by receiving $2f + 1$ signatures (603). Here, because all of the nodes have the pass vote list Pass_list, 0 is assigned to the chair node and sequential numbers are assigned to the nodes depending on their positions in the pass vote list. Then, the consensus committee configuration information may be represented as a bitmap and transferred.

As illustrated in FIG. 6, the chair maintains the consensus committee in the pass vote list Pass_list in order to check the consensus committee members that put a signature (604).

When multi-signature is completed, the block that is agreed upon is transferred as a committed block. Here, the consensus committee configuration information is provided, and may be used to check the nodes that put a signature in the pass vote list Pass_list (605).

Further, the nodes again generate a pass vote list Pass_list in order to form a consensus congress for a subsequent block $B_{n+2}$ using the received block.

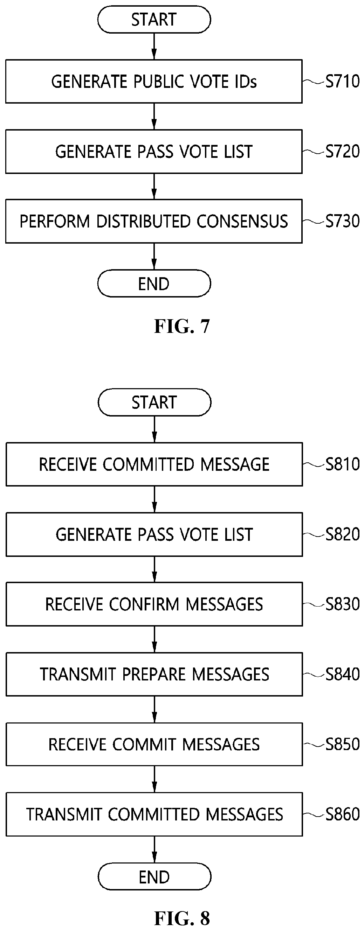

FIG. 7 is a flowchart illustrating an example of a distributed consensus method according to an embodiment of the present disclosure.

Referring to FIG. 7, in the distributed consensus method according to an embodiment of the present disclosure, public vote identifiers are generated using public node identifiers corresponding to nodes constituting a blockchain at step S710.

Here, a number of public vote identifiers equal to the number of votes of each of the nodes may be generated for the node using the public node identifier corresponding to the node.

Here, the public vote identifiers may be generated by adding or subtracting one of generation values, including 0, to or from the public node identifier corresponding to each of the nodes.

Here, the public node identifiers may be public keys corresponding to the nodes.

Also, in the distributed consensus method according to an embodiment of the present disclosure, an operation corresponding to a success probability of p is performed for each of the public vote identifiers, whereby a pass vote list is generated at step S720.

Here, the pass vote list may be generated in such a way that each of the nodes constituting the blockchain performs the operations for the nodes, including itself, based on the public vote identifiers. Here, the pass vote lists that the nodes constituting the blockchain generate at a specific time may be identical to each other.

Here, the operation may be to compare a random value generated using the public vote identifier and previous block information with a threshold corresponding to the success probability.

Also, in the distributed consensus method according to an embodiment of the present disclosure, a distributed consensus is performed based on at least part of consensus congress nodes corresponding to the pass vote list at step S730.

Here, the consensus congress nodes may be selected from among nodes included in the pass vote list.

Here, a consensus for a previous block corresponding to the previous block information may be finally confirmed by a chair node selected from among the consensus congress nodes for a current block.

Here, among the consensus congress nodes, a node corresponding to a largest or smallest value, among values corresponding to results of the operations, may become a chair node.

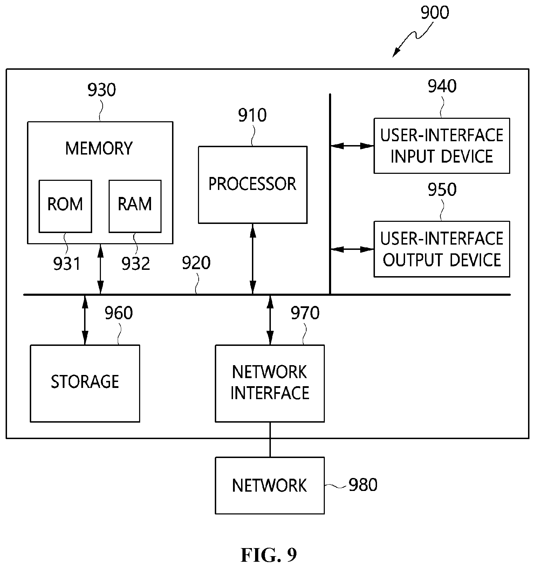

The distributed consensus method illustrated in FIG. 7 may be performed by a distributed consensus apparatus. The distributed consensus apparatus may be implemented based on the configuration illustrated in FIG. 9.

FIG. 8 is a flowchart illustrating an example of a blockchain generation method according to an embodiment of the present disclosure.

Referring to FIG. 8, in the blockchain generation method according to an embodiment of the present disclosure, a committed message corresponding to a previous block is received at step S810.

Also, in the blockchain generation method according to an embodiment of the present disclosure, a pass vote list is generated using information about the previous block and public vote identifiers at step S820.

Here, the pass vote list may be generated in such a way that each of nodes constituting the blockchain performs an operation corresponding to a success probability of p for the nodes, including itself, based on the public vote identifiers. Here, the pass vote lists that the nodes constituting the blockchain generate at a specific time may be identical to each other.

Here, the operation may be to compare a random value generated using the public vote identifier and the information about the previous block with a threshold corresponding to the success probability.

Here, a number of public vote identifiers equal to the number of votes of each of the nodes may be generated for the node using the public node identifier corresponding to the node.

Also, in the blockchain generation method according to an embodiment of the present disclosure, a chair node corresponding to a current block receives confirm messages from consensus congress nodes corresponding to the pass vote list and finally confirms the result of the consensus for the previous block based on the confirm messages at step S830. Here, the chair node may be recognized based on the pass vote list.

Also, in the blockchain generation method according to an embodiment of the present disclosure, the chair node transmits a prepare message for connecting the current block to the blockchain to consensus committee nodes selected from among the consensus congress nodes at step S840.

Also, in the blockchain generation method according to an embodiment of the present disclosure, the chair node receives commit messages from the consensus committee nodes at step S850.

Also, in the blockchain generation method according to an embodiment of the present disclosure, the chair node transmits a committed message corresponding to the current block to all of the nodes at step S860.

FIG. 9 is a block diagram illustrating a computer system configuration according to an embodiment of the present disclosure.

The distributed consensus apparatus, the blockchain generation apparatus, and nodes constituting a blockchain according to an embodiment may be implemented in a computer system 900 including a computer-readable recording medium.

The computer system 900 may include one or more processors 910, memory 930, a user-interface input device 940, a user-interface output device 950, and storage 960, which communicate with each other via a bus 920. Also, the computer system 900 may further include a network interface 970 connected with a network 980. The processor 910 may be a central processing unit or a semiconductor device for executing a program or processing instructions stored in the memory 930 or the storage 960. The memory 930 and the storage 960 may be storage media including at least one of a volatile medium, a nonvolatile medium, a detachable medium, a non-detachable medium, a communication medium, or an information delivery medium, or a combination thereof. For example, the memory 930 may include ROM 931 or RAM 932.

Here, at least one program may be recorded in the memory 930.

Here, the processor 910 may execute the program. Here, the program may generate public vote identifiers using public node identifiers corresponding to the nodes constituting the blockchain, generate a pass vote list by performing an operation corresponding to a success probability of p for each of the public vote identifiers, and perform a distributed consensus based on at least part of consensus congress nodes corresponding to the pass vote list.

Here, the pass vote list may be generated in such a way that each of the nodes constituting the blockchain performs the operation for the nodes including itself based on the public vote identifiers. Here, the pass vote lists that the nodes constituting the blockchain generate at a specific time may be identical to each other.

Here, the operation may be to compare a random value generated using the public vote identifier and previous block information with a threshold corresponding to the success probability.

Here, a number of public vote identifiers equal to the number of votes of each of the nodes may be generated for the node using the public node identifier corresponding to the node.

Here, the consensus congress nodes may be selected from among nodes included in the pass vote list.

Here, a consensus for a previous block corresponding to the previous block information may be finally confirmed by a chair node selected from among the consensus congress nodes for a current block.

Here, the public vote identifiers may be generated by adding or subtracting one of generation values, including 0, to or from the public node identifier corresponding to each of the nodes.

Here, the public node identifiers may be public keys corresponding to the nodes.

Here, among the consensus congress nodes, a node corresponding to a largest or smallest value, among values corresponding to the results of the operations, may become a chair node.

According to the present disclosure, all blockchain nodes, including a chair node, are aware of the nodes selected for a consensus congress, the number of nodes selected for the consensus congress, and the chair node before they receive messages about whether other nodes are selected for the consensus congress, so a consensus may be immediately performed without the exchange of messages related to the configuration of the consensus congress.

Also, the present disclosure may form a blockchain consensus congress by selecting a number of random nodes corresponding to the size of the consensus congress determined depending on the number of participating nodes while minimizing exchanges of messages for forming the consensus congress.

Also, the present disclosure uses public node identifiers such that a consensus congress randomly selected for each block without the exchange of messages for forming the consensus congress performs a consensus using a simple consensus algorithm, such as PBFT or the like, thereby reducing the message complexity of a blockchain system, improving performance, and maintaining decentralization.

Also, the present disclosure may efficiently reconfigure a blockchain consensus congress, the size of which is set for each block, without the exchange of additional messages.

Also, the present disclosure may prevent the complexity of a protocol for message exchanges from increasing and reduce latency because it does not require the exchange of messages for forming a consensus congress.

Also, the present disclosure may be easily applied to existing simple consensus algorithms by forming a consensus congress, the size of which is set depending on the number of participating nodes, without the exchange of messages for forming the consensus congress.

As described above, the method and apparatus for a distributed consensus and the blockchain generation method using the same according to the present disclosure are not limitedly applied to the configurations and operations of the above-described embodiments, but all or some of the embodiments may be selectively combined and configured, so the embodiments may be modified in various ways.

**Claims**

1. A method for a distributed consensus, performed by a distributed consensus apparatus, comprising:

   generating public vote identifiers using public node identifiers corresponding to nodes constituting a blockchain;
   generating a pass vote list by performing an operation corresponding to a success probability (p) for each of the public vote identifiers; and
   performing a distributed consensus based on at least part of consensus congress nodes corresponding to the pass vote list.

2. The method of claim 1, wherein:

   the pass vote list is generated in such a way that each of the nodes constituting the blockchain performs the operation for the nodes, including itself, based on the public vote identifiers, and
   pass vote lists that the nodes constituting the blockchain generate at a specific time are identical to each other.

3. The method of claim 2, wherein the operation is to compare a random value generated using the public vote identifier and previous block information with a threshold corresponding to the success probability.

4. The method of claim 3, wherein a number of public vote identifiers equal to a number of votes of each of the nodes is generated for the node using the public node identifier corresponding to the node.

5. The method of claim 4, wherein the consensus congress nodes are selected from among nodes included in the pass vote list.

6. The method of claim 5, wherein a consensus for a previous block corresponding to the previous block information is finally confirmed by a chair node selected from among the consensus congress nodes for a current block.

7. The method of claim 5, wherein the public vote identifiers are generated by adding or subtracting one of generation values, including 0, to or from the public node identifier corresponding to each of the nodes.

8. The method of claim 7, wherein the public node identifiers are public keys corresponding to the nodes.

9. The method of claim 3, wherein among the consensus congress nodes, a node corresponding to a largest or smallest value, among values corresponding to results of the operations, becomes a chair node.

10. An apparatus for a distributed consensus, comprising:

   one or more processors; and
   executable memory for storing at least one program executed by the one or more processors,
   wherein the at least one program
   generates public vote identifiers using public node identifiers corresponding to nodes constituting a blockchain,
   generates a pass vote list by performing an operation corresponding to a success probability (p) for each of the public vote identifiers, and
   performs a distributed consensus based on at least part of consensus congress nodes corresponding to the pass vote list.

11. The apparatus of claim 10, wherein:

   the pass vote list is generated in such a way that each of the nodes constituting the blockchain performs the operation for the nodes, including itself, based on the public vote identifiers, and
   pass vote lists that the nodes constituting the blockchain generate at a specific time are identical to each other.

12. The apparatus of claim 11, wherein the operation is to compare a random value generated using the public vote identifier and previous block information with a threshold corresponding to the success probability.

13. The apparatus of claim 12, wherein a number of public vote identifiers equal to a number of votes of each of the nodes is generated for the node using the public node identifier corresponding to the node.

14. The apparatus of claim 13, wherein a consensus for a previous block corresponding to the previous block information is finally confirmed by a chair node selected from among the consensus congress nodes for a current block.

15. A method for generating a blockchain, comprising:

   by a computing device corresponding to a node of the blockchain,
   receiving a committed message corresponding to a previous block;
   generating a pass vote list using information about the previous block and public vote identifiers;
   receiving, by a chair node corresponding to a current block, confirm messages from consensus congress nodes corresponding to the pass vote list and finally confirming, by the chair node, a result of a consensus for the previous block based on the confirm messages, the chair node being recognized based on the pass vote list; and
   transmitting, by the chair node, a prepare message for connecting the current block to the blockchain to consensus committee nodes selected from among the consensus congress nodes.

**FIG. 1**

**FIG. 2**

**FIG. 3**

FIG. 4

START

loop = NUMBER OF VOTES
count = 0
ID_list=[ ]
~S510

S520

NO

count < loop

YES

ID_list = [ID_list,
(NODE, PUBLIC KEY + count)]
~S530

count++

~S540

END

**FIG. 5**

**FIG. 6**

START

GENERATE PUBLIC VOTE IDs — S710

GENERATE PASS VOTE LIST — S720

PERFORM DISTRIBUTED CONSENSUS — S730

END

**FIG. 7**

START

RECEIVE COMMITTED MESSAGE — S810

GENERATE PASS VOTE LIST — S820

RECEIVE CONFIRM MESSAGES — S830

TRANSMIT PREPARE MESSAGES — S840

RECEIVE COMMIT MESSAGES — S850

TRANSMIT COMMITTED MESSAGES — S860

END

**FIG. 8**

**FIG. 9**

**EP 4 481 612 A2**

## REFERENCES CITED IN THE DESCRIPTION

**Patent documents cited in the description**

- US 20190327084
- US 20190379538
- US 20200403776
- US 20230066169

**Non-patent literature cited in the description**

- *Algorithm based on Byzantine agreement among decentralized agents (BADA),* 20 October 2020